# EUROPEAN PATENT APPLICATION

(11) **EP 2 849 130 A2**
(43) Date of publication of application: **18.03.2015**
(21) Application number: 14196343.9
(22) Date of filing: 07.02.2008
(51) Int. Cl.: G06Q 10/02, G06F 17/30

(54) **Compilation of scheduled transport price data**

(62) Divisional of application: 08101393.0
(71) Applicant: Skyscanner Limited, Grove Road IP21 4JP Norfolk Brockdish (GB)
(72) Inventor: Williams, Gareth John Jyndon, Edinburgh, EH3 6PX (GB)
(74) Representative: Langley, Peter James

(57) **Abstract**

There is provided a method of storing scheduled transport price data comprising the following steps:
(a)extracting scheduled transport price data from web page data using a plurality of Internet browsing clients;
(b)storing that data in a database of scheduled transport price data searchable by a scheduled transport price data search engine;
and in which:
(c)the number of different IP addresses from which the same price of an instance of scheduled transport is received is counted to determine whether it is trusted and can hence be distributed to the scheduled transport price data search engine.

## Description

### Field of the Invention

The present invention relates to a method and apparatus for the compilation of price data concerning scheduled transport. The compiled information is typically distributed.

### Background to the Invention

A scheduled journey by one or more vehicles, such as a car, train, aeroplane, helicopter, bus, ferry or hovercraft, upon which travel tickets can be booked, is referred to in this specification and the appended claims as an instance of scheduled transport.

Issues relating to the present invention will be discussed using examples taken from the field of compiling price data concerning scheduled flights. However, the issues are equally relevant to the broader field of compiling price data concerning instances of other types of scheduled transport.

Airline tickets are typically distributed through a variety of different channels including travel agents, who have access to dedicated ticket booking services, and online through both airlines own dedicated websites and price compilation or travel planning websites which provide information concerning the price of tickets for the services provided by a range of different transport operators.

The effective distribution of flight price data is of considerable importance to airlines as broad dissemination of flight price data can increase sales. The distribution of flight price data is made more complex by the modern trend towards providing prices which vary between flights and change dynamically, meaning that flight price data needs to be updated frequently.

Accordingly, airlines have a need to cost effectively distribute time-varying flight price data through a range of sales and information channels. However, this can represent a substantial cost burden to airlines in IT infrastructure, programming and support. Each new route for distributing flight price data will typically incur significant additional costs. In order to cope with this cost burden, various systems have been developed which facilitate the distribution of price data from airlines. In particular, Global Distribution Systems (GDS) have been developed in the travel/tourism industry to distribute accurate, live data regarding the cost and availability of a range of different transport services, including flight price data. An airline would typically subscribe to or partner with a GDS which provides IT infrastructure to which the airline uploads flight data (including prices and availability) for the onward distribution of that data to travel agents, online retailers and so forth. The GDS may also manage the reservation and sale of airline tickets. Nevertheless, although the use of a GDS can simplify the distribution of price data, the associated costs remain high and a GDS will typically charge airlines to upload flight data, change flight data, output flight data and to handle the reservation and sale of airline tickets. Furthermore, an airline will need to prepare data in a format suitable for transmission to a GDS which incurs costs.

One way in which airlines can reduce their cost of sales is by providing tickets for sale directly from branded websites dedicated to the sale of flights by an individual airline, and perhaps also partner airlines. An airline may pay no or less commission to third parties where it sells tickets directly through its own dedicated website. However, provision of dedicated websites is costly and requires significant investment in IT infrastructure, web programming and database programming to compile, process and serve flight price data and then to process ticket purchases and ticket distribution. As airlines will typically also distribute prices and sell tickets by means of a GDS, it costs more to distribute information only by these two different routes than it would cost simply to distribute prices via a dedicated website. Some airlines provide dedicated websites using data from a GDS, which incurs still greater costs.

The invention aims to address the problem of cost effectively compiling price data concerning instances of scheduled transport, such as flights. Some embodiments of the invention aim to distribute the compiled data for use in the sale of tickets to travel on instances of scheduled transport, and/or travel planning.

### Summary of the Invention

Within this specification and the appended claims, the term "executable instructions" includes program code, program code fragments, compiled program code, partly compiled program code, interpretable program code, interpretable program code fragments, interpretable scripts and interpretable script fragments, such as scripts or script fragments written in JavaScript. (JavaScript is a trade mark of Sun Microsystems, Inc.) Within this specification and the appended claims, the term "executable instructions" includes instructions which are interpretable, compilable, compiled or part-compiled, and also includes rules which specify calculations to be carried out by a computer, such as regular expressions as well as code which specifies instructions to be executed responsive to events.

According to a first aspect of the present invention, there is provided a method for compiling scheduled transport price data comprising the steps of:
(i) a first web page data server serving first web page data to an Internet browsing client responsive to a request from said client, the first web page data comprising scheduled transport price data, the scheduled transport price data comprising at least one identifier of an instance of scheduled transport and at least one price to travel on the identified instance of scheduled transport;
(ii) the Internet browsing client receiving web page data comprising at least the said first web page data served by the first web page data server, the received web page data comprising one or more received executable instructions; and
(iii) rendering a web page denoted by the received web page data and executing the said one or more received executable instructions;
wherein the execution of the said one or more executable instructions in the received web page data causes the Internet browsing client to transmit at least a portion of the received scheduled transport price data to a data receiving server.

Preferably, the data receiving server receives the said transmitted portion of received scheduled transport price data from the Internet browsing client. Preferably, the data receiving server stores the selected scheduled transport price data for further processing, such as distribution.

The invention makes use of the fact that airlines and other providers of scheduled transport will typically have already made some arrangement to provide a dedicated website selling tickets to travel on their instances of scheduled transport. Accordingly, the first web page data provides transport information and the first web page data server typically functions as a travel search engine and/or travel booking engine. It is relatively simply to amend the first web page data served by a web page data server to add executable instructions which, when executed, cause an Internet browsing client to transmit at least a portion of the received scheduled transport price data to a data receiving server and/or a reference to an address from which executable instructions can be downloaded which, when executed, cause an Internet browsing client to transmit at least a portion of the received scheduled transport price data to a data receiving server. This contrasts with the additional IT infrastructure which would be required to distribute price data by alternative routes, as well as by way of a dedicated website. The Internet browsing client should preferably execute executable instructions within the received web page data automatically and, as a result, transmit at least a portion of the received scheduled transport price data, responsive to download of the web page data, without any input from a user of the Internet browsing client.

Provided that Internet browsing clients request web pages containing information about specific instances of scheduled transport frequently, updated scheduled transport price data will be transmitted to the data receiving server frequently, thereby enabling the data receiving server to receive and optionally distribute updated price data. Although each Internet browsing client will only receive and transmit information concerning a limited number of instances of scheduled transport at once, many users will together transmit information concerning many instances of scheduled transport over a period of time, enabling price data concerning many instances of scheduled transport to be provided at once.

Typically, the received web page data comprises (preferably consists of) the first web page data and further web page data retrieved from addresses (typically URLs) specified within the first web page data. Preferably, the first web page data includes a reference to an address of a second web page data server from which second web page data is to be downloaded by the Internet browsing client and the Internet browsing client is operable to download second web page data from the referenced second web page data server responsive to receipt of the first web page data, such that the received web page data comprises both the first web page data and the second web page data.

The first web page data may comprise one or more first executable instructions and the second web page data may comprise (optionally consist of) one or more second executable instructions, the said one or more received executable instructions comprising the one or more first executable instructions and the one or more second executable instructions, wherein execution of the one or more first executable instructions causes the Internet browsing client to execute the one or more second executable instructions, wherein execution of the one or more second executable instructions by the Internet browsing client causes the Internet browsing client to transmit at least a portion of the received scheduled transport price data to the data receiving server. The one or more first executable instructions may comprise an instruction specifying that the one or more secondary executable instructions should be executed responsive to an event, such as the completion of downloading or rendering of the received web page data. Alternatively, all of the one or more received executable instructions may be part of (or all of) the second web page data.

These arrangements have the advantage that the first web page data need only include an appropriate reference to an address from which the second web page data can be retrieved from the second web page server and, in some embodiments, one or more first executable instructions which, when executed, cause the Internet browsing client to execute the one or more second executable instructions. A separate organisation may own and/or maintain the second web page data server and take responsibility for providing appropriate second web page data and one or more second executable instructions. This reduces the administrative burden and costs associated with amendment of the first web page data to be served by first web page data server responsive to requests.

Conveniently, a single Internet server may function as both the second web page data server and the data receiving server.

The reference to the address of second web page data may comprise a reference to an address (e.g. a URL) of an executable script on a second web page data server and the second web page data may comprise (optionally consist of) an executable script which functions as the one or more second executable instructions. The one or more first executable instructions may comprise an instruction to execute a script retrieved from the referenced address. The instruction to execute a script retrieved from the referenced address may comprise an instruction to execute a script responsive to an event, for example an event which is generated responsive to completion of loading and/or rendering of the received web page data.

Typically, the Internet browsing client comprises a computer running an Internet browser software application or component and the one or more received executable instructions are executable by the Internet browsing client's Internet browser software application or component. Typically, the Internet browsing client is operable to execute instructions received as script in web page data, in one or more scripting languages, such as JavaScript, JScript or VBScript (Jscript and VBScript are trade marks of Microsoft Corporation). Preferably, the one or more received executable instructions are in a scripting language which is executable by more than 10% and preferably more than 50% of Internet browsing clients.

Typically, the scheduled transport price data present in the first web page data comprises at least one identifier of an instance of scheduled transport. For example, where the scheduled transport price data relates to the price of scheduled flights, the first web page data preferably comprises flight numbers for each scheduled flight, which flight numbers function as identifiers of instances of scheduled transport, for example BA0123 may refer to British Airways flight No. 0123. Preferably, the transmitted at least a portion of the received scheduled transport price data comprises said at least one identifier of an instance of scheduled transport.

The at least one identifier of an instance of scheduled transport may comprise a time, such as a departure time and/or date, destination and/or origin, associated with an instance of scheduled transport.

Preferably, the scheduled transport price data which is received, and typically also transmitted, further comprises a price for travelling on an instance of scheduled transport identified by a said identifier, for example the price of a single ticket. The scheduled transport price data which is received, and typically also transmitted, may further comprise ticket category information, such as the class, selected from a plurality of classes (e.g. economy class, business class, first class), of accommodation provided on the instance of scheduled transport to which a particular price relates.

The at least a portion of scheduled transport price data which is transmitted may comprise all of the scheduled transport price data which is received from the first web page data server. However, the at least a portion of scheduled transport price data which is transmitted may comprise data selected from the received scheduled transport price data by the Internet browsing client responsive to the execution of received executable instructions.

The received scheduled transport price data which is transmitted to the data receiving server may be transmitted in a different format to that in which it is received.

In order to select the portion of the received scheduled transport price data to be transmitted by the Internet browsing client to the data receiving server responsive to the execution of the one or more received executable instructions, the one or more received executable instructions may cause the Internet browsing client to search at least a portion of the received web page data to extract the scheduled transport price data for transmission to the data receiving server. However, alternative methods may be employed, for example, the one or more received executable instructions may select specified data from a document object model of the received web page data.

The one or more received executable instructions (typically the one or more second executable instructions, where provided) may comprise pattern matching instructions, such as one or more regular expressions, which, when executed, cause the Internet browsing client to extract data which fulfils criteria specified by the pattern matching instructions, some or all of which extracted data is transmitted to the data receiving server.

Embodiments where the first web page data comprises a reference to an address of a second web page data server from which second web page data is to be downloaded have the further advantage that the second web page data (e.g. one or more second executable instructions) which are served by the second web page data server following a request from the Internet browsing client can be amended without the need for any actions by the administrators of the first web page data server. Typically, the second web page data server will be administered, and typically also controlled, by a different party to the party who administers the first web page data server.

Thus, the second web page data server can be amended to serve different secondary web page data responsive to a request from a web browsing client when it is determined that the data receiving server should receive different data or when the first web page data server is amended to serve second web page data in a different format. However, even when the first web page data server is amended to serve first web page data in a different format, it is a simple matter for the reference to an address of the second web page data server and the one or more first executable instructions to be retained, e.g. within a template.

The first web page data preferably includes files in formats such as HyperText Markup Language (HTML) or extended HyperText Markup Language (XHTML), as well as graphics content such as Joint Photographics Expert Group (JPEG) compressed files, Graphic Interface Format (GIF) files or Portable Document Format (PDF) files.

Preferably, the step of the Internet browsing client transmitting at least a portion of the received scheduled transport price data to the data receiving server uses a standard Internet protocol for an Internet browsing client, such as HTTP. The received executable instructions (e.g. the one or more first executable instructions or the one or more second executable instructions) may comprise an HTTP POST request.

Preferably, the received scheduled transport price data is compiled into a database of price data concerning a plurality of instances of scheduled transport. The received scheduled transport data may be used to update a database of price data concerning a plurality of instances of scheduled transport. The compilation and/or updating of a database of price data may be carried out by the data receiving server or further data processing apparatus which receives at least selected price scheduled transport price data from the data receiving server.

Typically, scheduled transport price data will be received from a plurality of Internet browsing clients. Preferably, scheduled transport price data will be received from

Internet browsing clients responsive to the downloading of first web page data from a plurality of different first web page data servers. Preferably, scheduled transport price data will be received from Internet browsing clients responsive to the downloading of first web page data from first web page data servers located at different addresses (e.g. URLs). Accordingly, the data which is transmitted by the intranet browsing client to the data receiving server responsive to the execution of the one or more received executable instructions preferably comprises an identifier, such as an address (e.g. a URL), of the first web page data server from which the price data was downloaded. Typically, the Internet browsing client transmits an identifier, such as an address (e.g. a URL), of the first web page data server from which web page data has been retrieved, to the second web page data server, responsive to download of the first web page data, and to the second web page data served by the second web page data server comprises one or more executable instructions (e.g. the one or more second executable instructions) which are selected dependent on the identifier of the first web page data server received by the second web page data server.

More preferably, the plurality of different first web page data servers serve data concerning different instances of scheduled transport, thus facilitating the compilation of a database of price data concerning a plurality of instances of scheduled transport received from a plurality of different first web page data servers. The compiled price data may be provided to a further Internet server which is operable to select and serve price data from the compiled price data responsive to search requests from Internet browser clients.

Accordingly, the method preferably comprises the further step of providing a scheduled transport price data search engine, wherein the scheduled transport price data searchable using the search engine comprises the selected scheduled transport price data which has been transmitted by the Internet browsing client to the data receiving server responsive to the execution of the executable instructions served to said client by the first web page data server.

Alternatively, or additionally, the method may comprise the further step wherein the data receiving server uses the selected scheduled transport price data to populate a database of scheduled transport price data. In order to provide an extensive database of scheduled transport price data the data receiving server may be in communication with a plurality of Internet browsing clients. In this case, a first web page data server may serve web page data to a plurality of Internet browsing clients responsive to each client request, wherein the served web page data comprises scheduled transport price data and executable instructions, the scheduled transport price data comprising at least one identifier of an instance of scheduled transport and at least one price associated with a said instance of scheduled transport; and the Internet browsing clients execute the executable instructions, wherein the execution of the executable instructions causes the Internet browsing clients to transmit at least a portion of the received scheduled transport price data from the served web page data to a data receiving server responsive to the execution of the executable instructions.

Two or more Internet browsing clients may be served web page data by two or more Internet servers, functioning as first web page data servers. Each Internet server, functioning as a first web page data server, may serve different executable instructions present within the web page data served to an Internet browsing client responsive to a request from that client. Furthermore, each Internet server, functioning as a first web page data server, may serve different web page data which comprises one or more addresses of further Internet servers, wherein the or each address may refer to one or more different further executable instructions located on one or more further Internet servers.

Preferably, the method further comprises the step of counting the number of different times that the same price of an instance of scheduled transport is received, or the number of different IP addresses from which the same price of an instance of scheduled transport is received, before a received price is trusted and distributed, for example

The invention extends in a second aspect to a first web page data server which is operable to serve first web page data to an Internet browsing client responsive to a request from a said Internet browsing client, said first web page data comprising scheduled transport price data and one or more first executable instructions, the one or more first executable instructions being such as to cause an Internet browsing client which executes the said one or more first executable instructions to transmit at least a portion of the received scheduled transport price data to a data receiving server. According to a third aspect, there is provided a first web page data server which is operable to serve first web page data to an Internet browsing client responsive to a request from a said Internet browsing client, said first web page data comprising scheduled transport price data and a reference to an Internet address from which an Internet browsing client can download second web page data comprising one or more executable instructions which, when executed by an Internet browsing client cause the Internet browsing client to transmit at least a portion of the received scheduled transport price data to a data receiving server.

According to a fourth aspect of the present invention there is provided a web page data server ("the second web page data server") which is operable to transmit web page data ("the second web page data") comprising one or more executable instructions to an Internet browsing client, which has received first web page data from a first web page data server responsive to a request from the said Internet browsing client, said first web page data including scheduled transport price data, wherein the said web page data and said one or more executable instructions are such as to cause the said Internet browsing client to transmit at least a portion of the said scheduled transport price data to a data receiving server.

The web page data server may function as the data receiving server.

The said web page data preferably comprises one or more regular expressions which specify data to be selected from the first web page data and transmitted to the data receiving server.

According to a fifth aspect of the present invention there is provided first web page data comprising scheduled transport price data and one or more first executable instructions, wherein the one or more first executable instructions are executable by an Internet browsing client to cause the Internet browsing client to transmit at least a portion of the received scheduled transport price data to a data receiving server.

Preferably, the first web page data comprises an address of second web page data and the first web page data is such as to cause an Internet browsing client to retrieve second web page data, comprising one or more second executable instructions, from the specified address, wherein the one or more first executable instructions are such as to cause an Internet browsing client to execute the one or more second executable instructions and the one or more second executable instructions are such as to cause the Internet browsing client to transmit at least a portion of the said scheduled transport price data to a data receiving server. Accordingly, the invention extends in a sixth aspect to first web page data comprising scheduled transport price data and a reference to an Internet address from which an Internet browsing client can download second web page data, the second web page data comprising one or more executable instructions, the first web page data and the one or more executable instructions being selected to cause an Internet browsing client which thereby receives the first and second web page data to transmit at least a portion of the received scheduled transport price data to a data receiving server.

The invention extends in a seventh aspect to an Internet browsing client comprising data storage storing received web page data, the received web page data comprising scheduled transport price data and one or more executable instructions which, when executed by the Internet browsing client are operable to cause the Internet browsing client to transmit at least a portion of the scheduled transport price data to a data receiving server.

Further optional and preferred features of the second through seventh aspects of the invention correspond to those discussed above in relation to the first aspect of the invention.

Although the embodiments of the invention described with reference to the drawings comprise methods performed by computer apparatus, and also computing apparatus, the invention also extends to program instructions, particularly program instructions on or in a carrier, adapted for carrying out the processes of the invention or for causing a computer to perform as the computer apparatus of the invention. Programs may be in the form of source code, object code, a code intermediate source, such as in partially compiled form, or any other form suitable for use in the implementation of the processes according to the invention. The carrier may be any entity or device capable of carrying the program instructions.

For example, the carrier may comprise a storage medium, such as a ROM, for example a CD ROM or a semiconductor ROM, or a magnetic recording medium, for example a floppy disc or hard disc. Further, the carrier may be a transmissible carrier such as an electrical or optical signal which may be conveyed via electrical or optical cable or by radio or other means. When a program is embodied in a signal which may be conveyed directly by cable, the carrier may be constituted by such cable or other device or means.

### Description of the Drawings

An example embodiment of the present invention will now be illustrated with reference to the following Figures in which:
Figure 1 is a schematic diagram of a system for the compilation of scheduled transport price data;
Figure 2 is a flow chart of the procedure carried out by components of the system of

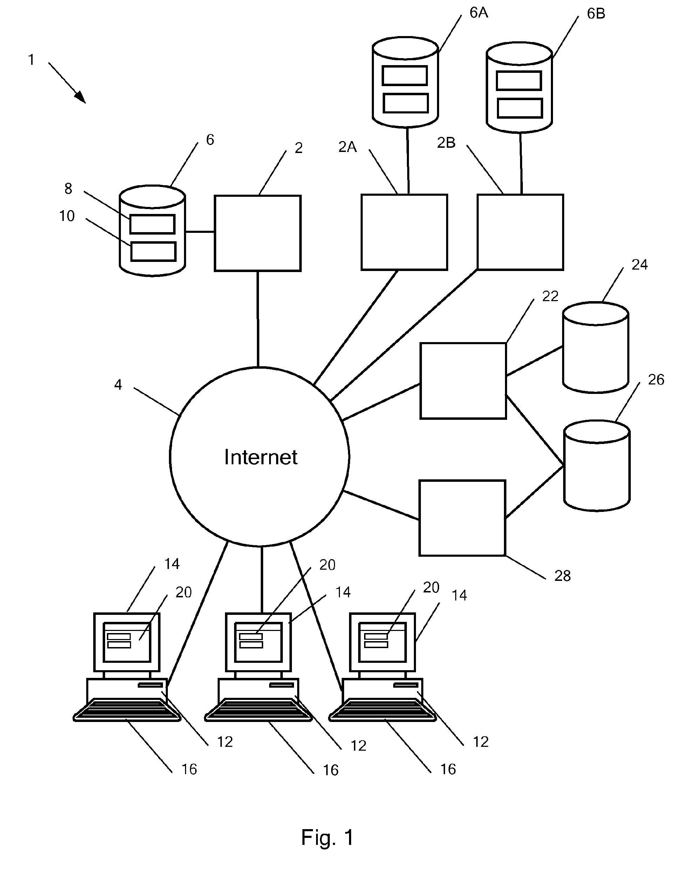

Figure 1 responsive to a flight price information request;

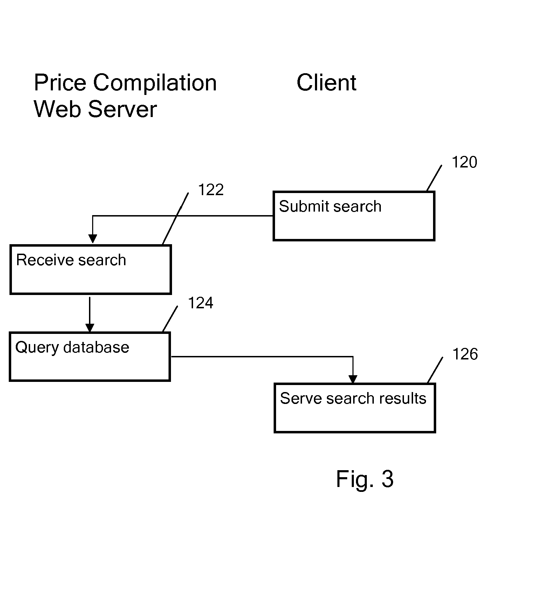

Figure 3 is a flow chart of the methods carried out by a price compilation web server;

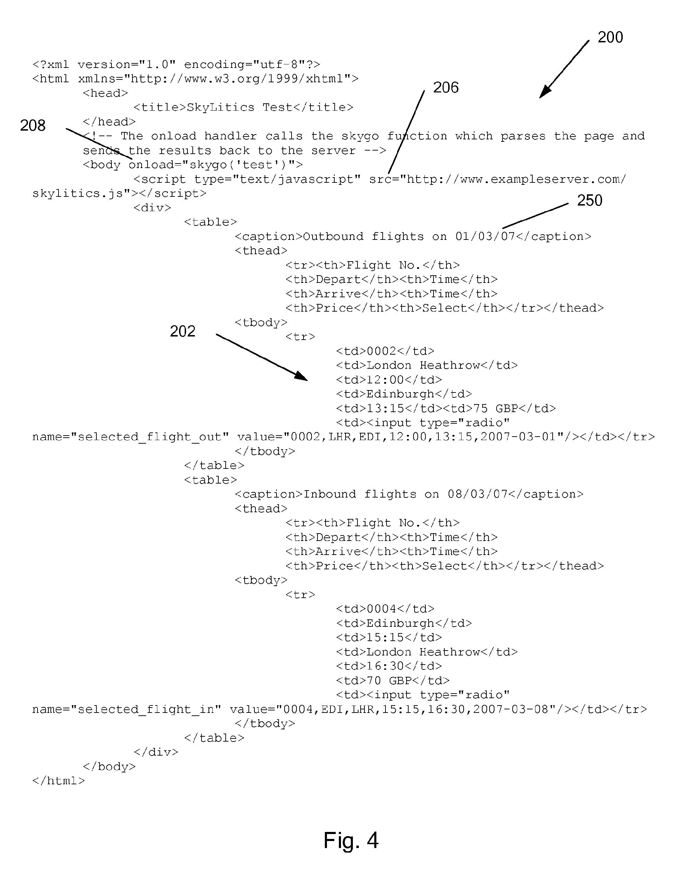

Figure 4 is a listing of an XHTML document served to an Internet browsing client computer;

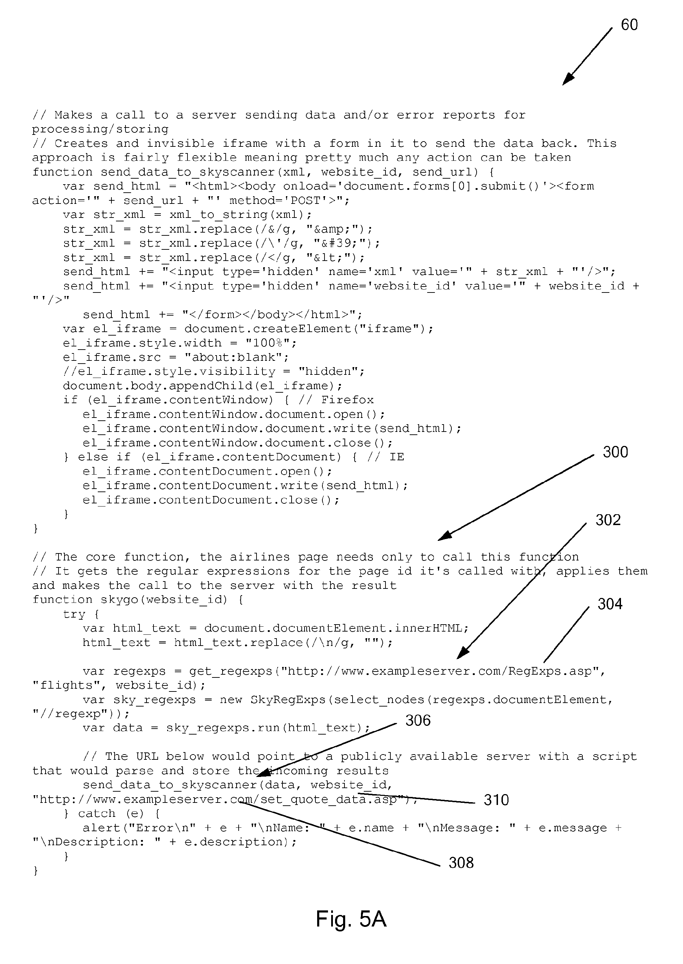

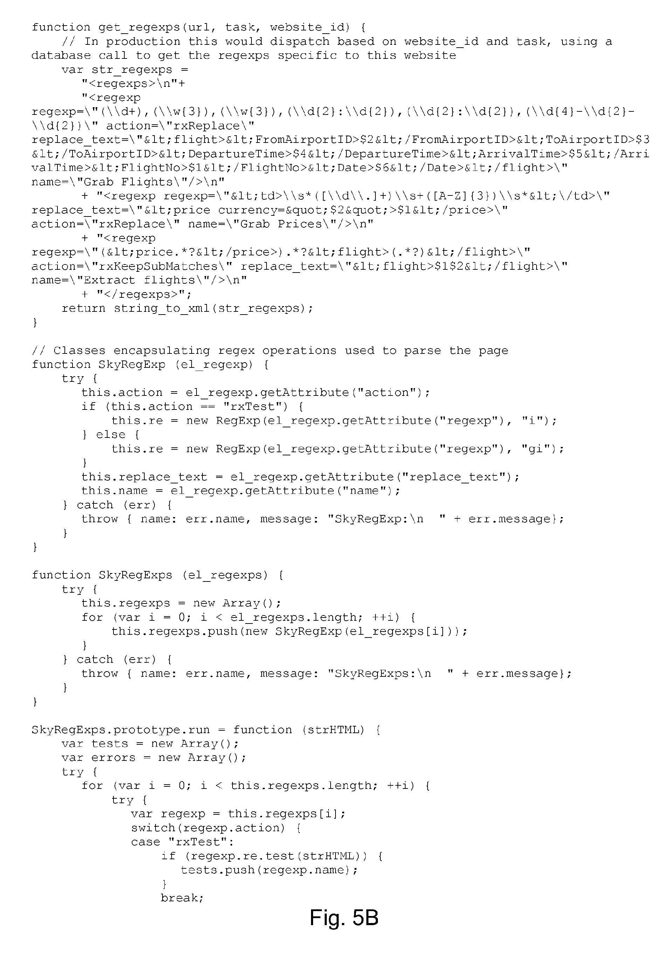

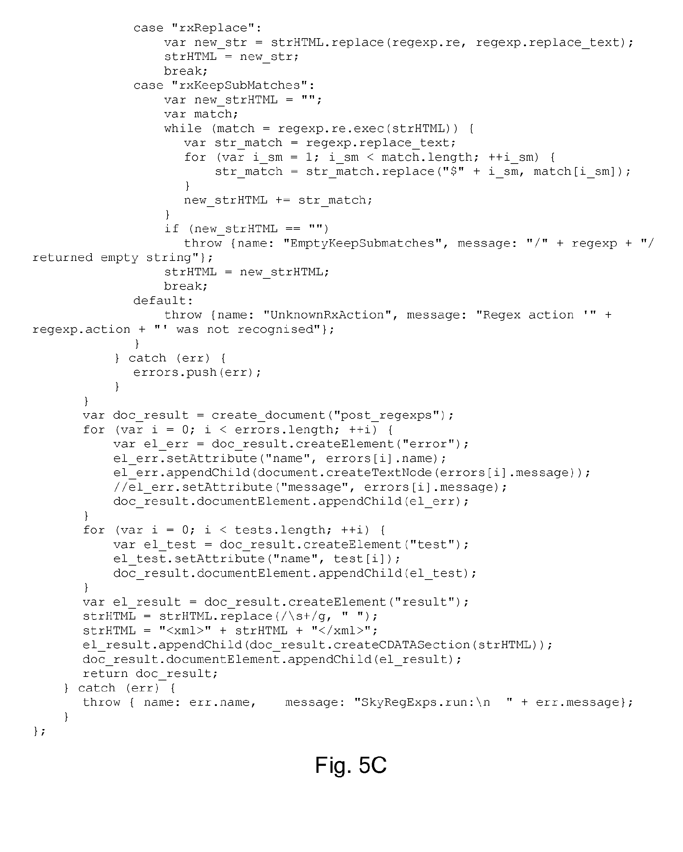

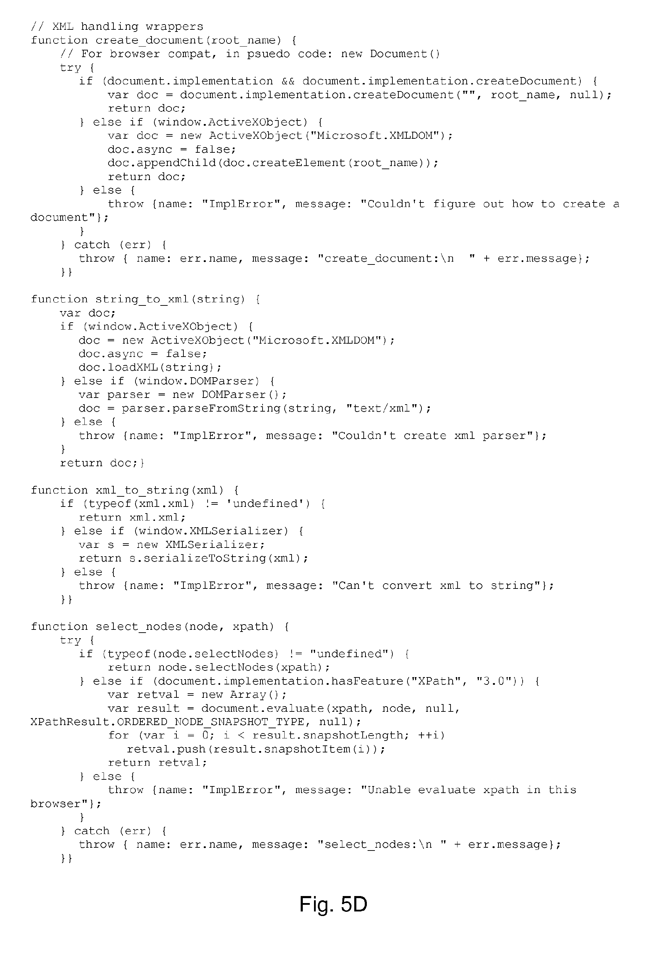

Figures 5A through 5D list a suitable JavaScript for selecting flight price data from the XHTML document of Figure 4 and transmitting the selected data to a data compilation server;

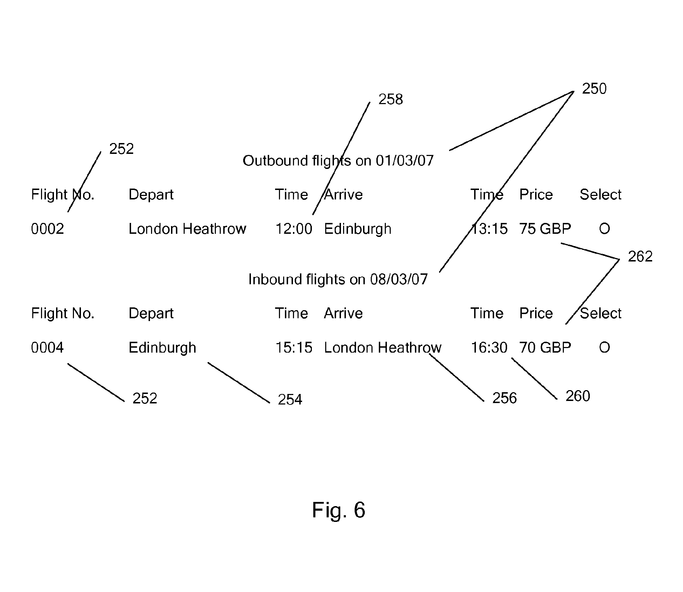

Figure 6 is a screenshot of the web page which results when the XHTML document of
Figure 4A and 4B is rendered by an Internet browser; and

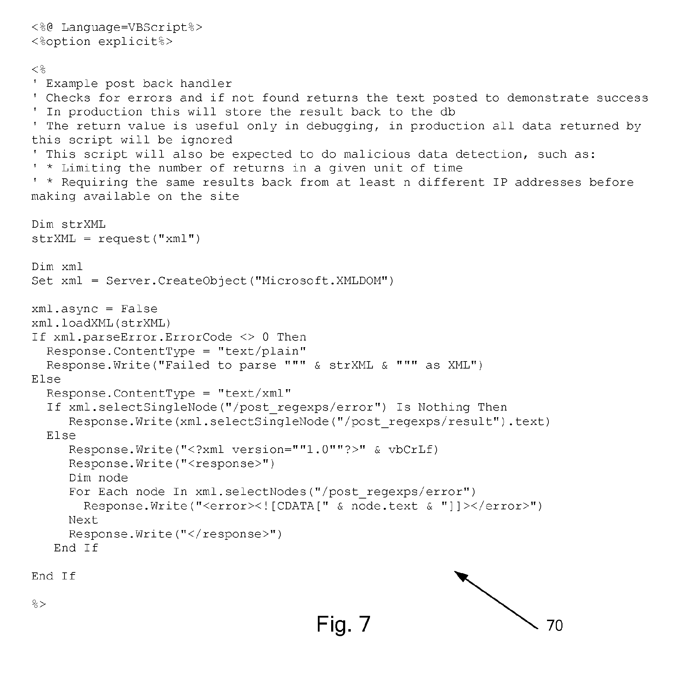

Figure 7 is a listing of a server-side script for processing data received by a client computer executing the JavaScript of Figures 5A through 5D.

### Detailed Description of an Example Embodiment

Figure 1 illustrates a system 1 for collecting and distributing data concerning the prices of scheduled flights (functioning as scheduled transport price data). A first web server 2 (functioning as the first web page data server) is operable to prepare and serve web pages responsive to requests received through the Internet 4. The web pages are prepared with reference to a database 6 of web page templates 8 and a database 10 of prices of tickets to travel on specific scheduled flights operated by a specific airline. In this example, individual scheduled flights function as instances of scheduled transport. The first web server is dedicated to serving information concerning flights from a single airline, and also their code sharing partners Additional web servers 2A and 2B provide information about scheduled flights operated by other airlines and have access to equivalent databases 6A, 6B of web page templates and ticket prices.

A plurality of client computers 12, such as conventional PCs, are also connected to the Internet and thereby in electronic communication with the first web servers. Each client computer has a display 14 and user input peripherals, such as a keyboard 16. Each client computer is operable to run a web browsing application which displays a browser window 20 and enables each client computer to function as an Internet browsing client.

A second server 22, functioning as both a data receiving server and the second web page data server, is also attached to the Internet and thereby in electronic communication with the plurality of computers. In this case, the second web page data server is located at an internet address at the domain www.exampleserver.com. The price compilation server is in electronic communication with a database comprising a plurality of script fragments 24, each of which is includes a regular expressions customised to the first web server located at a specific URL, and a database of compiled flight price data 26.

A price compilation web server 28 is also in electronic communication with the Internet, and thereby the plurality of computers. The price compilation web server periodically receives data from the compiled flight price data database.

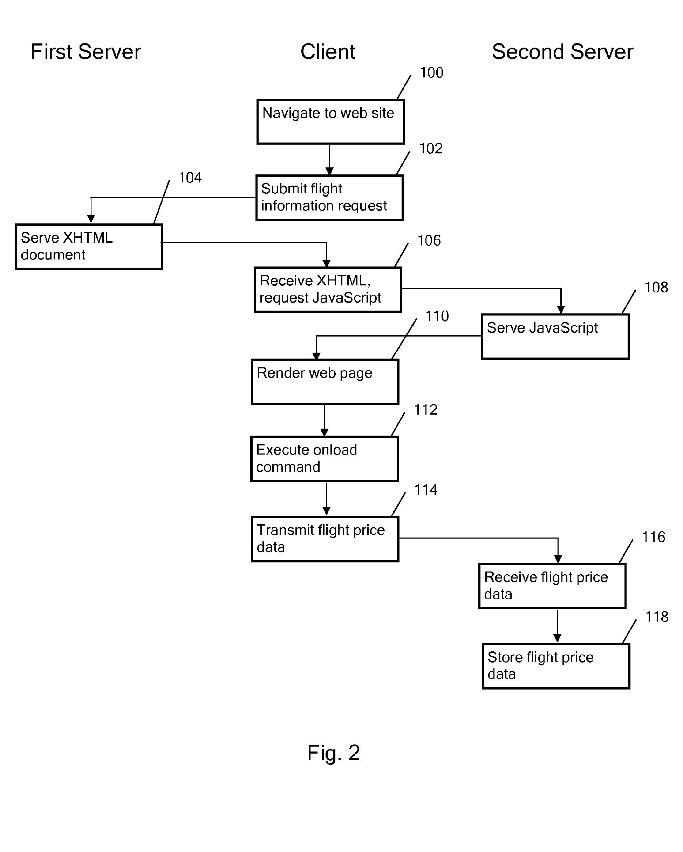

With reference to Figure 2, an example of the operation of the system begins with a user of one of the plurality of computers navigating to a website using their web browsing application, in a conventional fashion 100. The first web server provides a flight information request web page which includes information about the services of a travel supplier (e.g. an airline) and includes a flight information search facility, enabling the user to request information concerning the availability of flights from a particular travel supplier, and perhaps some other partner suppliers, along with the scheduled times, prices and other flight identifying information, such as the flight code. The flight information request web page may include user interface elements such as drop-down menus, checkbozes, text input fields and other conventional Internet user interface elements, enabling them to identify the flights in connection with which they would like further information. For example, a typical flight information request web page will provide user interface elements enabling a user to specify a date when they wish to travel, where they wish to travel from and to, and optionally other search criteria. Nevertheless, the flight information request web page may not provide a search facility, for example, it may simply comprise a hyperlink to a static web page with travel information concerning flights.

A user then submits a flight information request 102 via one of the plurality of computers. In response to the flight information request, the first web server serves 104 an XHTML document 200, which is listed in Figure 4. The XHTML document includes price data 202 concerning selected flights and optionally references 204 to other associated files which should also be retrieved from the first web server, such as image files, script files, cascading stylesheet files and the like, which, together with the XHTML document, function as the first web page data. The XHTML document also specifies 206 the URL of a JavaScript file 60 (listed in Figures 5A through 5D) which is to be downloaded from the second server (functioning as the second web page data server) for example by using the SRC attribute in a script tag. Under the control of the Internet browser, the user's computer receives the XHTML document and requests 106 the JavaScript file from the second server, which serves 108 the JavaScript file to the user's computer. The user's computer then renders 110 the received web page. With reference to Figure 6, the rendered web page lists information specified by the price data within the XHTML document, such as dates 250, flight identifying numbers 252, flight details such as departure locations 254, destinations 256, departure times 258, arrival times 260, and the price of tickets to travel on a specific flight 262.

Immediately after the web page is rendered, the Internet browser application generates an onload event which causes the computer to execute 112 the command 208 (which functions as the one or more first executable instructions) specified in the received XHTML file which causes the Internet browser application to execute 210 code within the received JavaScript file, which functions as the second executable instructions. In this example, the skygo function 300 calls a first function 302, get_regexps, which retrieves regular expressions from a specified Internet address 304. The regular expressions served by the second server responsive to the request are selected from a plurality of alternative functions, dependent on the URL of the first web server and so are customised to the format of the XHTML file. Further functions use regular expressions to cause the Internet browser application to select specified data from the received XHTML document.

A data transmission function 306 causes the Internet browser application to transmit 114 the selected data to the second server and specifies the URL 308 of an application which is to process the data and also the URL 310 of the first web server so that the second server can process the data correctly. The data transmission function creates an invisible IFrame containing a form and uses it to transmit the selected data over the Internet to the second server. The data which is transmitted includes not only the URL of the first web server, but dates and flight numbers, which function as identifiers of instances of scheduled transport, and associated prices of tickets to travel on the specified flights.

The second server receives 116 the selected data and executes a server-side script 70, listed in Figure 7, which causes the server to store 118 the received data in the database of compiled flight information, along with the date and time when the flight price data was received. Storing the date and time when the flight price data was received facilitates the subsequent monitoring of how up to date the flight price data is.

The compiled information is used to provide a price compilation web site which provides a search engine to enable users to find flights which fulfil specific criteria, and the prices of tickets to travel on those flights.

With reference to Figure 3, the price compilation web server periodically receives 122 search requests from computers, across the Internet. In response to search requests, it queries 124 the database of compiled flight information and serves 126 a web page providing information about flights which fulfil the search request criteria, including flight price data derived from the information which was previously received by the second server from individual computers, across the Internet. The price compilation web server may enable a user to subsequently book a ticket to travel on a flight which fulfils a search request, either by providing online purchase facilities or by redirecting the user to another web server, for example, the first web server from which flight price data concerning that flight originally came.

Accordingly the system provides a cost-effective method of compiling and distributing flight price data. The script served by the second server can be amended periodically by the organisation which controls the second server to fit changing needs for information without the need for the organisation which controls a first web server (e.g. an airline) to amend the web pages which are served by the respective first web server. If the organisation which controls a respective first web server amends the data which is included in the web pages which they serve, they can easily keep in the single line of code 208 which is required to download and execute the JavaScript file. The organisation which controls the second server can then amend the script which is used to select data from the amended web pages served by the respective first server. This is cost effective as the organisation which controls the second server will develop expertise in providing appropriate scripts to select the required price data from web pages served by a specific first server and the organisation which controls a specific first web server can distribute their price information without expenditure on additional IT infrastructure and complex programming.

In order to ensure the reliability of the received data, the second server (functioning as the data receiving server) may monitor the IP address from which price data concerning an instance of scheduled transport is received and only consider a particular price to be trusted, and thereby suitable for distribution, once it has received the same price from Internet browsing clients at a sufficient number of different IP addresses.

In the example described above, price data is transmitted by an Internet browsing client to the second server using an IFrame, one skilled in the art will recognise that numerous alternative methods may be employed to transmit the price data across the Internet, including, for example, the HTTP POST command, remote scripting, AJAX, XMLHTTP (for example, making use of the XMLHttpReqHost object), the IFrame HTML element, Image request with GET query strings.

Similarly, although in the above example the data received by the Internet browsing client from the first web server (functioning as the first web page data) includes both a reference to an internet address from which the JavaScript file (functioning as the secondary web page data) is downloaded and an executable instruction (onload = "skygo ('test')") which causes executable instructions within the JavaScript file to be executed, one skilled in the art will appreciate that, in some embodiments, the first web page data need only include a reference to the address of the secondary web page data to cause one or more executable instructions within the secondary web page data to be retrieved and executed.

Further modifications and variations may be made within the scope of the invention herein disclosed.

### CONCEPTS

1. A method for compiling scheduled transport price data comprising the steps of:
   (i) a first web page data server serving first web page data to an Internet browsing client responsive to a request from said client, the first web page data comprising scheduled transport price data, the scheduled transport price data comprising at least one identifier of an instance of scheduled transport and at least one price to travel on the identified instance of scheduled transport;
   (ii) the Internet browsing client receiving web page data comprising at least the said first web page data served by the first web page data server, the received web page data comprising one or more executable instructions; and
   (iii) rendering a web page denoted by the received web page data and executing the said one or more executable instructions;
      wherein the execution of the said one or more executable instructions in the received web page data causes the Internet browsing client to transmit at least a portion of the received scheduled transport price data to a data receiving server.
2. A method according to Concept 1, wherein the received web page data comprises the first web page data and further web page data retrieved with reference to at least one Internet address specified within the first web page data.
3. A method according to Concept 2, wherein the first web page data includes a reference to an address of a second web page data server from which second web page data is to be downloaded by the Internet browsing client and the Internet browsing client is operable to download second web page data from the second web page data server responsive to receipt of the first web page data.
4. A method according to Concept 3, wherein the first web page data comprises one or more first executable instructions and the second web page data comprises one or more second executable instructions and execution of the one or more first executable instructions causes the Internet browsing client to execute the one or more received second executable instructions, wherein execution of the one or more received second executable instructions by the Internet browsing client causes the Internet browsing client to transmit at least a portion of the received scheduled transport price data to the data receiving server.
5. A method according to Concept 4, wherein the one or more first executable instructions comprise an instruction specifying that the one or more secondary executable instructions should be executed responsive to an event.
6. A method according to any one of Concepts 3 to 5, wherein an Internet server functions as both the second web page data server and the data receiving server.
7. A method according to any one of Concepts 3 to 6, wherein the reference to the address of second web page data comprises a reference to an address of an executable script on a second web page data server and the second web page data comprises an executable script.
8. A method according to Concept 7, wherein the first web page data comprises an instruction to execute an executable script retrieved from a server at the referenced address.
9. A method according to any one preceding Concept, wherein the scheduled transport price data present in the first web page data comprises at least one identifier of an instance of scheduled transport and a price associated with travelling on the instance of scheduled transport identified by the said identifier.
10. A method according to any one preceding Concept, wherein the said at least a portion of scheduled transport price data which is transmitted comprises data selected from the received scheduled transport price data by the Internet browsing client responsive to the execution of received executable instructions.
11. A method according to Concept 10, wherein the one or more executable instructions comprise pattern matching instructions which, when executed, cause the Internet browsing client to extract data which fulfils criteria specified by the pattern matching instructions, some or all of which extracted data is transmitted to the data receiving server.
12. A method according to any one preceding Concept, wherein the scheduled transport price data received by the data receiving server is compiled into a database of compiled price data concerning a plurality of instances of scheduled transport.
13. A method according to Concept 12, wherein the said database of compiled price data includes price data received from Internet browsing clients responsive to the downloading of first web page data from a plurality of different first web page data servers.
14. A method according to Concept 12 or Concept 13, wherein the method comprises the further step of providing a scheduled transport price data search engine,
   wherein the scheduled transport price data searchable using the search engine comprises the selected scheduled transport price data which has been transmitted by the Internet browsing client to the data receiving server responsive to the execution of the executable instructions served to said client by the first web page data server.
15. A method according to any one of Concepts 12 to 14, further comprising the step of counting the number of different times that the same price of an instance of scheduled transport is received, or the number of different IP addresses from which the same price of an instance of scheduled transport is received, before a received price is trusted and distributed.

## Claims

1. A method of storing scheduled transport price data comprising the following steps:
(a) extracting scheduled transport price data from web page data using a plurality of Internet browsing clients;
(b) storing that data in a database of scheduled transport price data searchable by a scheduled transport price data search engine;
and in which:
(c) the number of different IP addresses from which the same price of an instance of scheduled transport is received is counted to determine whether it is trusted and can hence be distributed to the scheduled transport price data search engine.

2. Method of Claim 1, further comprising a step of storing the scheduled transport price data for further processing.

3. Method of any previous Claim, further comprising the step of counting the number of different times that the same price of an instance of scheduled transport is received, before a received price is trusted and distributed.

4. Method of any previous Claim, further comprising the step of enabling a user to subsequently book a ticket to travel.

5. Method of Claim 4, in which the ticket is to travel on a flight which fulfils a search request.

6. Method of any of Claims 1 to 3, further comprising the step of enabling a user to subsequently book a ticket to travel by providing on line purchase facilities.

7. Method of any of Claims 1 to 3, further comprising the step of enabling a user to subsequently book a ticket to travel by redirecting the user to another web server.

8. Method of any previous Claim, further comprising the step of providing a cost-effective method of compiling and distributing flight price data.

9. Method of any previous Claim, further comprising the step of storing the date and time the scheduled transport price data was received to facilitate monitoring of how up to date the scheduled transport price data is.

10. Server arranged to store the trusted scheduled transport price data of Claim 1, in which the server stores that data in a database of scheduled transport price data searchable by a scheduled transport price data search engine;
and in which:
the number of different IP addresses from which the same price of an instance of scheduled transport is received is counted by the server to determine whether it is trusted and can hence be distributed to the scheduled transport price data search engine.
